# EUROPÄISCHE PATENTANMELDUNG

(11) **EP 0 979 771 A2**
(43) Veröffentlichungstag der Anmeldung: **16.02.2000**
(21) Anmeldenummer: 99112138.5
(22) Anmeldetag: 24.06.1999
(51) Int. Cl.: B62K 5/04, B60G 21/00, B62D 9/00

(54) **Verfahren zur Beeinflussung des Wankverhaltens von Kraftfahrzeugen**

(30) Priorität: 13.08.1998 DE 19836674
(71) Anmelder: DaimlerChrysler AG, 70567 Stuttgart (DE)
(72) Erfinder: Acker, Bernd, 73733 Esslingen (DE); Krause, Wolfgang, 71154 Nufringen (DE); Meier, Gerhard, 73249 Wernau (DE); Spieth, Martin, 73776 Altbach (DE); Szell, Thomas, 71334 Waiblingen (DE)

(57) **Zusammenfassung**

Die Erfindung betrifft ein Verfahren zur Beeinflussung des Wankverhaltens von Kraftfahrzeugen mit mindestens drei Rädern. Mit Hilfe des Verfahrens werden Fahrzeugaufbaubewegungen unter dem Einfluß von am Schwerpunkt angreifenden Querkräften reduziert. Für das Verfahren wird für jede Fahrzeugachse ein zweigeteilter Stabilisator benötigt, in dem ein hydraulisches Stellglied integriert ist, das die beiden Stabilisatorhälften gegeneinander tordieren kann. Das in den Stabilisator eingeleitete Drehmoment wird über die Stabilisatorschenkel an den jeweiligen Radträgern übertragen. Mit diesem Drehmoment kann ein durch die Fahrzeugquerkraft verursachtes Wankmoment kompensiert werden.

Mit der vorliegenden Erfindung wird ein Verfahren bereitgestellt, mit dem das Wankverhalten im Hinblick auf Genauigkeit und die Reaktionsgeschwindigkeit verbessert wird.

## Beschreibung

Die Erfindung betrifft ein Verfahren zur Beeinflussung des Wankverhaltens von Kraftfahrzeugen mit mindestens drei Rädern. Zwischen den auf die Räder wirkenden Stabilisatoren und dem Fahrzeugaufbau oder zwischen den Stabilisatorabschnitten zweier Räder einer Achse ist jeweils mindestens ein Stellglied angeordnet. Am Kraftfahrzeug wird der Lenkradwinkel, die Fahrgeschwindigkeit, die Fahrzeugguerbeschleunigung und am Antriebsmotor mindestens die Motordrehzahl gemessen. Aus dem Lenkradwinkel und der Fahrggeschwindigkeit wird die theoretische Fahrzeugguerbeschleunigung berechnet. Aus der gemessenen oder der berechneten Querbeschleunigung, der Motordrehzahl und einer der Gaspedalstellung proportionalen Größe wird die Wankmomentenverteilung zwischen den Fahrzeugachsen errechnet. Aus den Daten der Querbeschleunigung und der Wankmomentenverteilung werden die Stellgliedkräfte ermittelt. Auf der Basis der Daten der jeweiligen Stellgliedkräfte wird die Energiezufuhr zu den entsprechenden Stellgliedern gesteuert.

Ein derartiges Verfahren ist aus einem Vortrag bekannt: "Aktive Roll-Stabilisation - eine kostengünstige Lösung zur aktiven Fahrwerksregelung" gehalten im Haus der Technik e.V., Essen 1993; Veranstaltungsnummer T306330563. Dort wird ein aktives Fahrwerksystem beschrieben, das eine Verbesserung der Fahrzeugquerdynamik zur Aufgabe hat. Das Verfahren befaßt sich mit dem Reduzieren der Fahrzeugaufbaubewegung unter dem Einfluß einer am Schwerpunkt angreifenden Querkraft. Es benötigt am Kraftfahrzeug für jede Fahrzeugachse einen zweigeteilten Stabilisator. In der Teilungsfuge des Stabilisators ist ein hydraulisches Stellglied angeordnet, das die beiden Stabilisatorhälften gegeneinander tordieren kann. Das in den Stabilisator eingeleitete Drehmoment wird über die Stabilisatorschenkel an den jeweiligen Radträgern übertragen. Die Reaktionskräfte werden am Fahrzeugaufbau abgestützt. Dadurch wirkt auf den Fahrzeugaufbau ein Drehmoment um die Wankachse. Mit diesem Drehmoment kann ein durch die Fahrzeugquerkraft verursachtes Wankmoment kompensiert werden.

Zur Steuerung der Stellglieder werden zum einen der Lenkradwinkel und die Fahrgeschwindigkeit erfaßt, um daraus die auf den Fahrzeugaufbau wirkende Querbeschleunigung zu berechnen. Die Querbeschleunigung kann auch direkt gemessen werden. Zum anderen werden die Drehzahl und der Drosselklappenwinkel des das Kraftfahrzeug antreibenden Verbrennungsmotors erfaßt. U.a. aus diesen Meßwerten wird die Zugkraftänderung bzw. die Wankmomentenverteilung ermittelt. Die Querbeschleunigung und die Wankmomentenverteilung bestimmen die Kräfte die in den Stellgliedern an den verschiedenen Fahrzeugachsen zum Einsatz kommen.

Der vorliegenden Erfindung liegt daher das Problem zugrunde, das Verfahren zur Beeinflussung des Wankverhaltens im Hinblick auf Genauigkeit und die Reaktionsgeschwindigkeit zu verbessern und universeller zu gestalten.

Das Problem wird mit den Merkmalen des Hauptanspruchs gelöst. Bei dem neuen Verfahren werden an mindestens zwei Rädern einer Achse die Raddrehzahlen gemessen und aus den Raddrehzahlen wird die für die Berechnung der Querbeschleunigung notwendige Fahrgeschwindigkeit ermittelt. Am Antriebsmotor wird das Motormoment gemessen oder aus motortypischen Meßdaten und/oder Kennfeldern hergeleitet. Die theoretische Querbeschleunigung wird mit einem Schwellwert verglichen, wobei bis zum Erreichen des Schwellwerts die Stellglieder nicht aktiv sind, während bei einem Übersteigen des Schwellwertes die Differenz zwischen der theoretischen und gemessenen Querbeschleunigung ermittelt wird. Anschließend wird die Differenz mit einem Differenzschwellwert verglichen, wobei bis zum Erreichen dieses Differenzschwellwertes die berechnete Querbeschleunigung als aktuelle Querbeschleunigung weiterverwendet wird, während bei einem Übersteigen des Differenzschwellwertes die gemessene Querbeschleunigung als aktuelle Querbeschleunigung definiert wird. Ferner wird in Abhängigkeit von den Drehzahlen der Fahrzeugräder oder der mittleren Drehzahl der Radpaare einzelner Achsen, der aktuellen Querbeschleunigung, der Änderung des Antriebsmoments für einen vorgegebenen, regulären Fahrzustandsbereich eine theoretische Wankmomentenverteilung ermittelt. Die Drehzahlen der Achsen oder Räder, die aktuelle Querbeschleunigung und die Antriebsmomentenänderung werden jeweils mit entsprechenden Schwellwerten verglichen, wobei bis zum Erreichen der Schwellwerte die theoretische Wankmomentenverteilung als aktuelle Wankmomentenverteilung verwendet wird, während beim Überschreiten von mindestens zwei der genannten Schwellwerte eine neue, aktuelle Wankmomentenverteilung errechnet wird. Abschließend werden die Stellkräfte der Stellglieder als Funktionen der aktuellen Querbeschleunigung und der aktuellen Wankmomentenverteilung errechnet, in Signale zur Ansteuerung der Stellglieder umgesetzt und die Stellglieder mit Energie zur Erzeugung der ermittelten Kräfte versorgt.

Mit dem Verfahren wird ein Wanken bei Kurvenfahrten weitgehend verhindert. Es ermöglicht durch eine variable Wankmomentenverteilung beispielsweise zwischen einer Vorder- und Hinterachse eine positive Beeinflussung des Fahrverhaltens. Dazu werden die Stabilisatoren an der Vorder- und der Hinterachse mit Hilfe von geeigneten Stellgliedern verspannt. Als Stellglieder können beispielsweise die aus der DE 196 47 300.4 bekannten Hydromotoren verwendet werden. Alternativ können auch pneumatische oder elektromechanische Stellglieder verwendet werden.

Ein Stellglied kann zwischen den beiden Hälften eines U-Stabilisators angeordnet sein. Ist das Stellglied ein Schwenkmotor, so ist z.B. die rechte Stabilisatorhälfte am Stator angeflanscht, während die linke Hälfte Teil des Rotors ist. Beide Hälften können hydraulisch gegeneinander verdreht und gesperrt werden. Eine weitgehende Entkopplung der Stabilisatorhälften ist möglich.

Die Stellglieder können auch zwischen jeder Stabilisatorhälfte und dem Fahrzeugaufbau angeordnet sein, so daß die Kopplung der Stabilisatorhälften hydraulisch, pneumatisch oder elektromechanisch nachgebildet wird.

Bei einer Kurvenfahrt wird zumindest annähernd proportional zur Querbeschleunigung pro Achse eine Kraft bzw. ein Moment aufgebaut, die einer Wankbewegung des Fahrzeugaufbaus entgegenwirkt, so daß das Fahrzeug nur geringfügig wankt. Dazu wird aus mehreren Meßgrößen und deren Auswertung eine Wankmomentenverteilung berechnet. Die Meßgrößen werden immer nur teilweise ausgewertet und mit Schwellwerten verglichen bzw. auf ihre Plausibilität überprüft, um so beispielsweise verrauschte Meßgrößen durch vergleichbare, auf anderen Meßgrößen basierende Berechnungswerte zu ersetzen.

Die Wankmomentenverteilung kann zusätzlich über einen beispielsweise durch den Fahrer von Hand zu betätigenden Schalter beeinflußt werden, um dem Fahrzeug zumindest bereichsweise zwei verschiedene Fahrcharakteristiken zu verleihen. Durch diesen Schalter kann zwischen einem komfortablen und einem sportlichen Fahrverhalten gewählt werden. Bei einer sportlichen Einstellung reagiert das Kraftfahrzeug agiler. Es weist ein Fahrverhalten mit einer Übersteuertendenz auf. Im Gegensatz hierzu verhält sich das Fahrzeug bei einer komfortablen Einstellung mehr untersteuernd.

Weitere Einzelheiten der Erfindung ergeben sich aus den nicht zitierten Unteransprüchen und der nachfolgenden Beschreibung einer in Form eines Flußdiagramms schematisch dargestellten Ausführungsform. Die Formelzeichen sind in einer dem Flußdiagramm vorangestellten Formelzeichenliste erläutert.

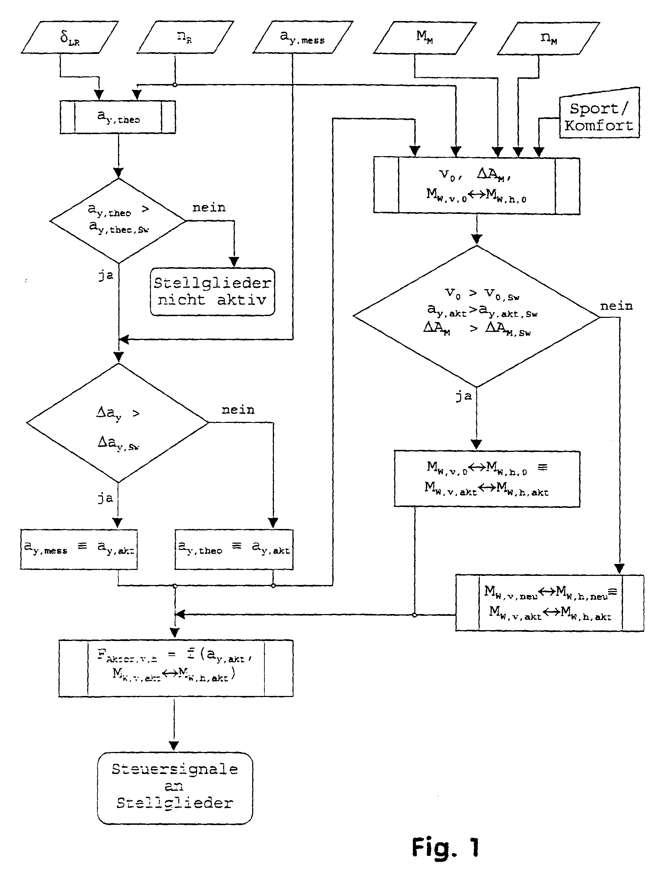

Die Figur 1 zeigt dieses Flußdiagramm. Zur Bestimmung der Querbeschleunigung werden der Lenkradwinkel, die Drehzahlen der Fahrzeugräder und die Querbeschleunigung direkt oder indirekt gemessen.

Der Lenkradwinkel liefert zusammen mit der Lenkgetriebeübersetzung die Fahrtrichtung bzw. den Radius des momentan abgefahrenen Kurvenabschnitts. Anstelle des Lenkradwinkels können - besonders bei Allradlenkungen - auch die Radeinschläge aller gelenkten Räder gemessen werden.

Die zur Berechnung der Querbeschleunigung notwendige Fahrgeschwindigkeit ergibt sich in der Regel u.a. aus der mittleren Fahrgeschwindigkeit der nicht angetriebenen Fahrzeugachse.

Die berechnete Querbeschleunigung eilt der gemessenen voraus und ist nicht so verrauscht wie die gemessene Querbeschleunigung. Sie ist daher besser zur Ansteuerung des Systems geeignet.

Die berechnete Querbeschleunigung wird permanent mit einem Schwellwert verglichen, der alle Kurvenfahrten, einschließlich der theoretischen Geradeausfahrten in Fahrten mit oder ohne Wankausgleich unterteilt. Unterhalb des Schwellwertes, beispielsweise bei Geradeausfahrt, ist das System deaktiviert. Die Stellglieder sind nicht aktiv.

Wird der Schwellwert überschritten, wird die Differenz zwischen der berechneten bzw. theoretischen Querbeschleunigung und der gemessenen berechnet und mit einem Differenzschwellwert verglichen. Beide Werte werden vor dem Vergleichen tiefpaßgefiltert. Ist die Differenz größer als der Differenzschwellwert, so erfolgt eine gleitende Umschaltung auf die gemessene Querbeschleunigung. Letztere wird als aktuelle Querbeschleunigung für die weiteren Berechnungen verwendet. Das hat den Vorteil, daß bei außergewöhnlichen Fahrzuständen Fehlinterpretationen der berechneten Querbeschleunigungen vermieden werden, wie beispielsweise beim Schleudern des Fahrzeugs. Hierbei ergäbe sich durch die unwillkürliche Gegenlenkreaktion des Fahrers ein falscher Querbeschleunigungwert.

Mit Hilfe des Motormoments, der Motordrehzahl, den mittleren Fahrgeschwindigkeiten der Achsen wird zusammen mit der Wahl der Schalterstellung des Komfort/Sportschalters eine Wankmomentenverteilung erstmals errechnet. Entsprechend dieser erstberechneten Wankmomentenverteilung werden die Stellglieder voreingestellt. Gleichzeitig wird die Antriebsmomentenänderung als Funktion der mittleren Fahrgeschwindigkeit der Antriebsachse, des Motormoments und der Motordrehzahl ermittelt.

Die Fahrgeschwindigkeit, die Antriebsmomentenänderung und die aktuelle Querbeschleunigung werden fortlaufend mit entsprechenden vorgegebenen Schwellwerten verglichen. Werden im Ausführungsbeispiel alle drei Schwellwerte überschritten, so werden entsprechend der Höhen der Schwellwertüberschreitungen neue Wankmomentenverteilungen errechnet. Ansonsten wird die erstberechnete Wankmomentenverteilung beibehalten.

Aus der aktuellen Wankmomentenverteilung und der aktuellen Querbeschleunigung werden die Stellgliedkräfte ermittelt. Aus den Stellgliedkräften werden Steuersignale generiert, über die - beispielsweise bei hydraulischen Stellgliedern - die Ventile zur Beaufschlagung der Hydromotoren gesteuert oder geregelt werden.

In die Berechnungen der Stellgliedkräfte fließen neben den in Figur 1 dargestellten Eingangsgrößen selbstverständlich alle notwendigen fahrzeug- und stellgliedtypischen Daten ein.

### Formelzeichen,

- a_{y,mess}: Querbeschleunigung, gemessen
- a_{y,theo}: Querbeschleunigung, errechnet
- a_{y,akt}: Querbeschleunigung, aktuell
- a_{y,theo,Sw}: Schwellwert für die theo. Querbeschleunigung
- a_{y,akt,Sw}: Schwellwert für die akt. Querbeschleunigung
- δ_{LR}: Lenkradwinkel
- Δa_{y}: Differenz von theoretischer und gemessener Querbeschleunigung
- Δa_{y,Sw}: Schwellwert für die Querbeschleunigungsdifferenz
- ΔA_{M}: Antriebsmomentenänderung
- ΔA_{M,Sw}: Schwellwert für die Antriebsmomentenänderung
- F_{Aktor, v, h}: Stellkraft der Stellglieder an der Vorder- und Hinterachse
- M_{M}: Motormoment
- M_{W,v}: Wankmoment, vorn
- M_{W,h}: Wankmoment, hinten
- M_{W,v,0}↔M_{W,h,0}: Wankmomentenverteilung, erstberechnet
- M_{W,v,neu}↔M_{W,h,neu}: Wankmomentenverteilung, neu
- M_{W,v,akt}↔M_{W,h,akt}: Wankmomentenverteilung, aktuell
- n_{M}: Motordrehzahl
- n_{R}: Drehzahlen der Fahrzeugräder
- v₀: Fahrzeuggeschwindigkeit

## Patentansprüche

1. Verfahren zur Beeinflussung des Wankverhaltens in Kraftfahrzeugen mit mindestens drei Rädern,
- wobei zwischen den auf die Räder wirkenden Stabilisatoren und dem Fahrzeugaufbau oder zwischen den Stabilisatorabschnitten zweier Räder einer Achse jeweils mindestens ein Stellglied angeordnet ist,
- wobei am Kraftfahrzeug der Lenkradwinkel, die Fahrgeschwindigkeit, die Fahrzeugguerbeschleunigung und am Antriebsmotor mindestens die Motordrehzahl gemessen wird,
- wobei aus dem Lenkradwinkel und der Fahrgeschwindigkeit die theoretische Fahrzeugguerbeschleunigung berechnet wird,
- wobei aus der gemessenen oder der berechneten Querbeschleunigung, der Motordrehzahl und einer der Gaspedalstellung proportionalen Größe eine Wankmomentenverteilung errechnet wird,
- wobei aus den Daten der Querbeschleunigung und der Wankmomentenverteilung die Stellgliedkräfte ermittelt werden und
- wobei auf der Basis der Daten der jeweiligen Stellgliedkräfte die Energiezufuhr zu den Stellgliedern gesteuert wird,
dadurch gekennzeichnet,
- daß an mindestens zwei Rädern einer Achse die Raddrehzahlen gemessen werden und aus den Raddrehzahlen die für die Berechnung der Querbeschleunigung notwendige Fahrgeschwindigkeit berechnet wird,
- daß am Antriebsmotor das Motormoment gemessen wird oder aus motortypischen Meßdaten und/oder Kennfeldern ermittelt wird,
- daß die theoretische Querbeschleunigung mit einem Schwellwert verglichen wird, wobei bis zum Erreichen des Schwellwertes die Stellglieder nicht aktiv sind, während bei einem Übersteigen des Schwellwertes die Differenz zwischen der theoretischen und gemessenen Querbeschleunigung ermittelt,
- daß die Differenz mit einem Differenzschwellwert verglichen wird, wobei bis zum Erreichen des Differenzschwellwertes die berechnete Querbeschleunigung als aktuelle Querbeschleunigung weiterverwendet wird, während bei einem Übersteigen des Differenzschwellwertes die gemessene Querbeschleunigung als aktuelle Querbeschleunigung definiert wird,
- daß in Abhängigkeit von den Drehzahlen der Fahrzeugräder oder der Radpaare einzelner Achsen, der aktuellen Querbeschleunigung, der Änderung des Antriebsmoments für einen vorgegebenen, regulären Fahrzustandsbereich eine Wankmomentenverteilung ermittelt wird,
- daß die Drehzahlen der Achsen oder Räder, die aktuelle Querbeschleunigung und die Antriebsmomentenänderung jeweils mit entsprechenden Schwellwerten verglichen werden, wobei bis zum Erreichen der Schwellwerte die erstberechnete Wankmomentenverteilung als aktuelle Wankmomentenverteilung verwendet wird, während beim Überschreiten von mindestens zwei der genannten Schwellwerte eine neue, aktuelle Wankmomentenverteilung errechnet wird und
- daß die Stellkräfte der Stellglieder als Funktionen der aktuellen Querbeschleunigung und der aktuellen Wankmomentenverteilung errechnet werden.

2. Verfahren gemäß Anspruch 1, dadurch gekennzeichnet, daß zur Berechnung der Wankmomentenverteilung ein manuell betätigbarer Schalter abgefragt wird, der die Wahl zwischen einem Berechnungsmodus für komfortablen oder sportlichen Fahrstil ermöglicht.

3. Verfahren gemäß Anspruch 1, dadurch gekennzeichnet, daß die Stellglieder Hydromotoren sind.
